# EUROPEAN PATENT APPLICATION

(11) **EP 3 272 830 A1**
(43) Date of publication of application: **24.01.2018**
(21) Application number: 16768273.1
(22) Date of filing: 25.02.2016
(51) Int. Cl.: C09J 175/04, B32B 27/00, C09J 175/08

(54) **SOLVENT-FREE LAMINATION ADHESIVE, CURED PRODUCT OF SAME, POLYOL COMPOSITION FOR LAMINATION ADHESIVES, AND MULTILAYER FILM**

(30) Priority: 20.03.2015 JP 2015057871
(71) Applicant: DIC Corporation, Tokyo 174-8520 (JP)
(72) Inventor: KIMURA Ryoji, Tokyo 174-8520 (JP); OHARA Shin-ichi, Tokyo 174-8520 (JP); TAKAHASHI Shigekazu, Tokyo 174-8520 (JP); FUJII Tadashi, Tokyo 174-8520 (JP)
(74) Representative: Adam, Holger
(86) International application number: PCT/JP2016/055623
(87) International publication number: WO 2016/152370

(57) **Abstract**

Provided are a solvent-free laminating adhesive which enables a laminate after lamination to have a good appearance, and which enables a laminate to maintain a good appearance even when the laminate is formed by high-speed lamination; a cured product of the solvent-free laminating adhesive; a polyol composition for lamination adhesives, which serves as one component of the adhesive; and a multilayer film which uses the adhesive. A solvent-free laminating adhesive composition contains, as essential components, (A) a polyisocyanate component and (B) a polyol component. In the solvent-free laminating adhesive composition, the polyol component (B) contains (b1) castor oil or a hydroxyl group-containing castor oil derivative, and (b2) a polyalkylene glycol having a number average molecular weight of 2,500 to 7,000.

## Description

### Technical Field

The present invention relates to a solvent-free laminating adhesive, a cured product thereof, a polyol composition for lamination adhesives, which serves as one component of the adhesive, and a multilayer film obtained by laminating various types of films using the adhesive. In more detail, the present invention relates to an adhesive for laminating, which is used for laminating various plastic films, metal vapor deposited films, aluminum foils, and the like to produce a composite film useful for packaging materials primarily for foods, medicines, detergents, and the like.

### Background Art

Laminate films used for various packaging materials, labels, and the like are those laminated with various films, metal foils, paper, and the like to impart designs, functionality, preservation, convenience, and transportability thereto. For such laminate films, a dry lamination method is commonly used, in which an adhesive dissolved in an organic solvent is applied to a film, the organic solvent is volatilized in a process of passing through an oven, and another film is adhered thereto. However, in recent years, from the viewpoint of reducing the environmental burden and improving the working environment, there is an increasing demand for two-liquid type solvent-free laminating adhesives containing no organic solvent.

With respect to such a solvent-free laminating adhesive, it is not necessary to take into consideration the residual solvent in the laminate film and the solvent-free laminating adhesive does not require a drying step, and therefore, there are many benefits such as energy savings and low running costs.

However, there is the following problem in the coating method of the solvent-free adhesive. Since the resin itself in the solvent-free adhesive is applied by a roll coater, when the film and the coater are separated after the adhesive coating, a so-called resin threading state is easily occurs, and when the threading is broken to thereby cause the adhesive to transfer to the film, the coated surface becomes rough, air is easily entrapped in the adhesive layer, and the appearance of the multilayer film is deteriorated. The problem of the deterioration of the appearance of the multilayer film due to such air entrapment becomes more serious in the case where the adhesive itself has a more increased viscosity.

Therefore, there is a viscosity restriction on solvent-free adhesives, and the resin is generally designed to have a molecular weight smaller than that of the solvent-based adhesives. However, due to the reduced molecular weight, the time necessary for developing sufficient adhesion strength and sufficient heat resistance after lamination is increased, thereby causing a disadvantage that a long aging time is required. In addition, since there is no solvent involved, there is also a problem in that the pot life after blending the main body and the hardener is shortened.

Therefore, in the related art, there is known a technique of using an aromatic diisocyanate as a main body and a polyester diol and a low molecular weight diol such as a diethylene glycol as a hardener in combination as a technique for shortening the aging time of a solvent-free adhesive (refer to Patent Document 1 described below).

The solvent-free laminating adhesive described in Patent Document 1 is effective for the adhesive strength and shortening the aging time of the solvent-free adhesive, but due to the combination of the aromatic isocyanate and the polyester diol, the viscosity is comparatively high as a resin for a solvent-free adhesive. Therefore, in the case where lamination of a metal deposited film is performed under high-speed conditions of 200 m/min or more, the metal deposited film having a coated surface being rough is fed and laminated on a second sheet, and the mixing of bubbles due to air entrapment is likely to be caused. Furthermore, since the polyester diol and the low molecular weight diol such as diethylene glycol are used in combination as a hardener, the modulus of elasticity of the adhesive itself is lowered, and bubbles tend to expand due to movement and aggregation of the bubbles after lamination, in particular, laminate appearance defects, poor workability due to misting, and ill effects on worker health are caused at the time of high-speed lamination.

### Citation List

### Patent Literature

[PTL 1] JP-A-2014-159548

### Summary of Invention

### Technical Problem

Accordingly, an object of the present invention is to provide a solvent-free laminating adhesive which enables a laminate after lamination to have a good appearance and which enables a laminate to maintain a good appearance especially in cases where the laminate is formed by high-speed lamination, a cured product of the solvent-free laminating adhesive, a polyol composition for lamination adhesives, which serves as one component of the adhesive, and a multilayer film using the adhesive.

### Solution to Problem

As a result of intensive research to solve the problems described above, the present inventors have found a polyisocyanate/polyol-curable solvent-free adhesive using castor oil or hydroxyl group-containing castor oil derivative and polyalkylene glycol having a number average molecular weight of 2,500 to 7,000 as a polyol component such that the appearance of the laminate is good while maintaining fundamental adhesive performances such as a long pot life and laminate heat resistance, thereby completing the present invention.

That is, the present invention relates to a solvent-free laminating adhesive which is a solvent-free laminating adhesive composition including a polyisocyanate component (A) and a polyol component (B) as essential components, in which the polyol component (B) contains castor oil or a hydroxyl group-containing castor oil derivative and a polyalkylene glycol having a number average molecular weight of 2,500 to 7,000.

The present invention further relates to a polyol composition for lamination adhesives containing castor oil or a hydroxyl group-containing castor oil derivative (b1) and polyalkylene glycol (b2) having a number average molecular weight of 2,500 to 7,000.

The present invention further relates to a cured product obtained by curing the solvent-free laminating adhesive.

The present invention further relates to a multilayer film obtained by coating the solvent-free laminating adhesive on a first plastic film, laminating a second plastic film on the coated surface, and curing the adhesive layer.

### Advantageous Effects of Invention

According to the present invention, it is possible to provide a solvent-free laminating adhesive which enables a laminate after lamination to have a good appearance and which enables a laminate to maintain a good appearance especially in cases where the laminate is formed by high-speed lamination, a cured product of this solvent-free laminating adhesive, a polyol composition for lamination adhesives, which serves as one component of this adhesive, and a multilayer film using the adhesive.

### Description of Embodiments

The solvent-free laminating adhesive of the present invention uses the castor oil or hydroxyl group-containing castor oil derivative and the polyalkylene glycol having a number average molecular weight of 2,500 to 7,000 described above together as the hardener components of the solvent-free laminating adhesive such that the adhesive itself has low viscosity and a high modulus of elasticity, the appearance of the laminate is good, and it is also possible to obtain a long pot life, which is a fundamental performance as an adhesive, and a high laminate heat resistance.

Here, it is possible to use commercially available castor oils. In addition, examples of hydroxyl group-containing castor oil derivatives include dehydrated castor oil, hardened castor oil which is a hydrogenated product of castor oil, or a 5 to 50 mol ethylene oxide adduct of castor oil. Among the above, in particular, castor oil is preferable from the viewpoint that it is possible to reduce the viscosity of the adhesive.

On the other hand, examples of polyalkylene glycols having a number average molecular weight of 2,500 to 7,000 include polyethylene glycol which is a polymer of ethylene oxide, polyethylene glycol which is a polymer of propylene oxide, polyethylene glycol which is a polymer of butylene oxide, and the like. It is possible to produce these polyalkylene glycols by polymerizing each alkylene glycol with water or an alcohol as an initiator.

Here, examples of alcohols which are able to be used as the initiator include glycols such as ethylene glycol, diethylene glycol, propylene glycol, 1,3-propanediol, 2-methyl-1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol; and trifunctional or higher polyfunctional alcohols such as glycerin, trimethylolpropane, pentaerythritol, and sorbitol.

In the present invention, the polyalkylene glycol has a number average molecular weight (Mn) in the range of 2,500 to 7,000. Selecting a polyalkylene glycol having a number average molecular weight (Mn) of 2,500 or more increases the modulus of elasticity of the adhesive and makes it possible to effectively suppress the movement and aggregation of bubbles which entered the adhesive during lamination. On the other hand, setting the number average molecular weight (Mn) to 7, 000 or less makes it possible to prevent the viscosity of the adhesive from becoming excessively high, and the processability is excellent as a solvent-free adhesive. Among the above, the number average molecular weight (Mn) is preferably in the range of 28,000 to 6,000, from the viewpoint that the appearance of the laminate at the time of high speed lamination becomes particularly good.

The polyol component (B) which is a hardener in the solvent-free laminating adhesive of the present invention forms the polyol composition for lamination adhesives of the present invention, and contains a castor oil or a hydroxyl group-containing castor oil derivative (b1) and a polyalkylene glycol (b2) having a number average molecular weight (Mw) of 2, 800 to 7, 000, and the composition ratio thereof is such that the mass ratio [(b1)/(b2)] is preferably 90/10 to 20/80 from the viewpoint of appearance of the finally obtained laminate and prevention of misting. Among these, in order to increase the productivity of the laminate and from the viewpoint of obtaining a good laminate appearance even in the case of high-speed lamination, the number average molecular weight (Mn) of the polyalkylene glycol (b2) is preferably in a range of 2, 800 to 6, 000, and the mass ratio [(b1)/(b2)] of the castor oil or hydroxyl group-containing castor oil derivative (b1) to the polyalkylene glycol (b2) is preferably a ratio of 75/25 to 25/75.

In the present invention, other polyol component than the castor oil or the hydroxyl group-containing castor oil derivative and polyalkylene glycol having a number average molecular weight of 2, 500 to 7, 000 may be used within a range not impairing the effect of the present invention. Such other polyol components include glycols such as ethylene glycol, propylene glycol, 1,3-propanediol, 2-methyl-1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bis-hydroxyethoxybenzene, 1,4-cyclohexanediol, 1,4-cyclohexanedimethanol, and triethylene glycol; bisphenols such as bisphenol A, bisphenol F, hydrogenated bisphenol A, and hydrogenated bisphenol F; dimer diols; a polyalkylene glycol obtained by addition polymerization of an alkylene oxide such as ethylene oxide, propylene oxide, butylene oxide, epichlorohydrin, tetrahydrofuran, or cyclohexylene, in the presence of a polymerization initiator such as glycol described above; a urethane bond-containing polyether polyol in which the molecular weight of the polyalkylene glycol is further increased with the aromatic or aliphatic polyisocyanate; a polyester polyol which is a reaction product of a polyester obtained by a ring-opening polymerization reaction of cyclic ester compounds such as propiolactone, butyrolactone, ε-caprolactone, σ-valerolactone, β-methyl-σ-valerolactone, and a polyhydric alcohol such as the glycol, glycerin, trimethylolpropane, or pentaerythritol. These other polyol components are desirably 10% by mass or less in the polyol component (B).

Next, examples of the polyisocyanate component (A) used as the main body in the present invention include aromatic polyisocyanates such as tolylene diisocyanate, xylylene diisocyanate, diphenylmethane diisocyanate, 1,5-naphthalene diisocyanate, and triphenylmethane triisocyanate; aliphatic polyisocyanates such as 1,6-hexamethylene diisocyanate, isophorone diisocyanate, 4,4'-methylenebis (cyclohexyl isocyanate), lysine diisocyanate, trimethylhexamethylene diisocyanate, and 1,3-(isocyanatomethyl) cyclohexane; polyisocyanates which are a reaction product of these aromatic or aliphatic polyisocyanates and a polyol, a biuret form of these aromatic or aliphatic polyisocyanates, or derivatives (modified products) of polyisocyanates such as isocyanurate forms of these aromatic or aliphatic polyisocyanates, and adduct forms obtained by modifying these aromatic or aliphatic polyisocyanates with trimethylolpropane.

Specific examples of polyols used for the reaction with the aromatic or aliphatic polyisocyanate include alkylene glycols such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, 1,4-cyclohexanediol, and 1,4-cyclohexanedimethanol; bisphenols such as bisphenol A, bisphenol F, hydrogenated bisphenol A, and hydrogenated bisphenol F; dimer diols; bishydroxy ethoxy benzene; polyalkylene glycols such as diethylene glycol, triethylene glycol, other polyethylene glycols, polypropylene glycol, and polybutylene glycol; urethane bond-containing polyether polyols obtained by further increasing the molecular weight of the polyalkylene glycol with the aromatic or aliphatic polyisocyanate; a polyester polyol obtained by reacting the alkylene glycol or polyalkylene glycol with an aliphatic dicarboxylic acid having 2 to 13 carbon atoms such as oxalic acid, malonic acid, succinic acid, glutaric acid, adipic acid, fumaric acid, maleic acid, suberic acid, azelaic acid, sebacic acid, undecanedioic acid, dodecanedioic acid, and tridecanedioic acid; polyester polyols which are a reaction product of a polyester obtained by a ring-opening polymerization reaction of a cyclic ester compound such as propiolactone, butyrolactone, ε-caprolactone, σ-valerolactone, and β-methyl-σ-valerolactone and a polyhydric alcohol such as the glycol, glycerine, trimethylolpropane, and pentaerythritol.

From the viewpoint of increasing the adhesive strength while lowering the viscosity of the adhesive itself, the polyol used for the reaction with the aromatic or aliphatic polyisocyanate is preferably polyalkylene glycol or polyester polyol and the polyalkylene glycol preferably has a number average molecular weight (Mn) in a range of 200 to 6, 000. On the other hand, the polyester polyol is preferably obtained by reacting the alkylene glycol or polyalkylene glycol having a molecular weight of 300 or less with an aliphatic polyvalent carboxylic acid having 2 to 30 carbon atoms. In addition, the polyester polyol of the latter may be used as a raw material alcohol component at a ratio of 10% by mass or less of a tri-functional or higher alcohol such as glycerin, trimethylolpropane, or pentaerythritol in the polyol component.

Among the polyisocyanate components (A) detailed above, a polyisocyanate obtained by reacting an aromatic polyisocyanate with polyalkylene glycol having a number average molecular weight in a range of 200 to 6,000 and a polyisocyanate obtained by reacting an aromatic polyisocyanate with a polyester polyol having a number average molecular weight in the range of 200 to 3,000 are preferable as a soft packaging base material in terms of imparting appropriate flexibility to a cured product, specifically, a polyisocyanate with an isocyanate content ratio of from 5 to 20% by mass according to a titration method (using di-n-butylamine) is preferable in terms of obtaining an appropriate resin viscosity and excellent coatability.

On the other hand, a polyisocyanate obtained by reacting an aromatic polyisocyanate with a polyester polyol having a number average molecular weight of 200 to 3,000 and a polyisocyanate obtained by reacting an aromatic polyisocyanate with a mixture of a polyester polyol having a number average molecular weight of 200 to 3,000 and a polyalkylene glycol having a number average molecular weight of 200 to 6,000 are preferable as a hard base material of a solvent-free adhesive in terms of excellent adhesion strength, specifically, a polyisocyanate having an isocyanate content ratio of from 5 to 20% by mass according to a titration method (using di-n-butylamine) is preferable in terms of obtaining appropriate resin viscosity and excellent coatability.

Here, the reaction ratio of the aromatic polyisocyanate and the mixture of the polyalkylene glycol or the polyester polyol is such that the equivalent ratio [isocyanate/hydroxyl group] of the isocyanate in the aromatic polyisocyanate to the hydroxyl group in the polyol is in a range of 1.5 to 5.0, which is preferable in terms of the viscosity of the adhesive being in an appropriate range and the coatability being good.

Here, in the present invention, the number average molecular weights (Mn) of the polyalkylene glycol and polyester polyol as the raw material of the polyisocyanate component (A) and the polyalkylene glycol forming the polyol component (B) are values measured by gel permeation chromatography (GPC) under the conditions described below.

Measuring device: HLC-8220 GPC manufactured by Tosoh Corporation
Column: TSK-GUARDCOLUMN SuperHZ-L manufactured by Tosoh Corporation
+ TSK-GEL SuperHZM-M × 4 manufactured by Tosoh Corporation Detector: Refractive Index Detector (RI)
Data processing: Multistation GPC-8020 model II manufactured by Tosoh Corporation
Measurement conditions: column temperature 40°C
   Solvent Tetrahydrofuran
   Flow rate 0.35 ml/min
Standard; Monodisperse polystyrene
Sample: A 0.2% by mass tetrahydrofuran solution in terms of resin solid content filtered with a microfilter (100 µl)

In addition, regarding the ratio of the polyisocyanate component (A) and the polyol component (B) to be used for the solvent-free laminating adhesive of the present invention, the equivalent ratio [isocyanate group/hydroxyl group] of the isocyanate group in the polyisocyanate component (A) and the hydroxyl group in the polyol component (B) is normally appropriately selected within a range where the isocyanate group is greater in consideration of the isocyanate group being consumed by moisture or active hydrogen in a printing ink, for example, preferably a ratio of 1.0 to 5.0, and particularly preferably a ratio of 1.5 to 3.5 in terms of an appropriate degree of crosslinking and good heat resistance.

As described above in detail, the solvent-free laminating adhesive of the present invention contains the polyisocyanate component (A) and the polyol component (B) as essential components; however, further mixing an aliphatic cyclic amide compound with either component out of the polyisocyanate component (A) and the polyol component (B) or blending the aliphatic cyclic amide compound as a third component during application makes it possible to effectively suppress the elution of harmful low molecular chemical substances typified by aromatic amines in the laminate packaging into the contents thereof.

Examples of the aliphatic cyclic amide compound used here include δ-valerolactam, ε-caprolactam, ω-enanthollactam, η-capryllactam, β-propiolactam, and the like. Among these, ε-caprolactam is preferable from the viewpoint of the excellent effect of reducing the elution amount of low molecular chemical substances. In addition, it is preferable to mix the aliphatic cyclic amide compound in a range of 0.1 to 5 parts by mass per 100 parts by mass of the polyol component (B).

The solvent-free laminating adhesive of the present invention may be used in combination with a pigment, as necessary. The usable pigments in this case are not particularly limited, and examples thereof include organic pigments and inorganic pigments described in "Paint Materials Handbook" 1970 edition (edited by the Japan Paint Manufacturers Association) such as extender pigments, white pigments, black pigments, gray pigments, red pigments, brown pigments, green pigments, blue pigments, metal powder pigments, luminescent pigments, and pearlescent pigments, as well as plastic pigments and the like. There are various specific examples of these coloring agents, examples of organic pigments include various insoluble azo pigments such as Benzidine Yellow, Hansa Yellow, and Rekiddo 4R; soluble azo pigments such as Rekiddo C, Carmine 6B, and Bordeaux 10; various (copper) phthalocyanine pigments such as phthalocyanine blue and phthalocyanine green; various chlorine-based dyeing lakes such as Rhodamine lake and methyl violet lake, various mordant dye pigments such as quinoline lake and fast sky blue; various vat dye-based pigments such as anthraquinone-based pigments, thioindigo-based pigment, and perinone-based pigments; various quinacridone pigments such as Syncasia Red B; various dioxazine pigments such as dioxazine violet; various condensed azo pigments such as chromophthal; aniline black and the like.

Examples of inorganic pigments include various chromates such as chrome yellow, zinc chromate, and molybdate orange; various ferrocyanic compounds such as Prussian blue; various metal oxides such as titanium oxide, zinc white, Mapikoero, iron oxide, bengara, chrome oxide green, zirconium oxide; various sulfides or selenides such as cadmium yellow, cadmium red, and mercury sulfide; various sulfates such as barium sulfate and lead sulfate; various silicates such as calcium silicate and ultramarine blue; various carbonates such as calcium carbonate and magnesium carbonate; various phosphates such as cobalt violet and manganese violet; various metal powders such as aluminum powder, gold powder, silver powder, copper powder, bronze powder, and brass powder; flake pigments and mica flake pigments of these metals; metallic pigments and pearl pigments such as mica flake pigments and mica iron oxide pigment in the form coated with metal oxide; graphite, carbon black, and the like.

Examples of extender pigments include precipitated barium sulfate, Gohun pigment, precipitated calcium carbonate, calcium bicarbonate, white limestone, alumina white, silica, hydrous fine silica (white carbon), ultrafine anhydrous silica (Aerosil), silica sand, talc, precipitated magnesium carbonate, bentonite, clay, kaolin, ocher, and the like.

Furthermore, examples of plastic pigments include " Grandoll PP-1000" and "PP-2000S" manufactured by DIC Corporation, and the like.

As the pigments used in the present invention, inorganic oxides such as titanium oxide and zinc white as the white pigment and carbon black as the black pigment are more preferable since these are excellent in durability, weather resistance, and design properties.

The mass ratio of the pigment used in the present invention is preferably from 1 to 400 parts by mass and more preferably from 10 to 300 parts by mass, with respect to the total of 100 parts by mass of the polyisocyanate component (A) and the polyol component (B), since the adhesion property, the blocking resistance, and the like are excellent.

It is also possible to use an adhesion promoter in the solvent-free laminating adhesive of the present invention. Examples of adhesion promoters include coupling agents and epoxy resins such as silane coupling agents, titanate-based coupling agents, and aluminum-based coupling agents.

Examples of silane coupling agents include aminosilanes such as γ-aminopropyltriethoxysilane, γ-aminopropyltrimethoxysilane, N-β (aminoethyl)-γ-aminopropyltrimethoxysilane, N-β (aminoethyl)-γ aminopropyltrimethyldimethoxysilane, and N-phenyl-γ-aminopropyltrimethoxysilane; epoxy silanes such as β-(3,4-epoxycyclohexyl) ethyltrimethoxysilane, γ-glycidoxypropyltrimethoxysilane, and γ-glycidoxypropyltriethoxysilane; vinyl silanes such as vinyltris (β-methoxyethoxy) silane, vinyltriethoxysilane, vinyltrimethoxysilane, γ-methacryloxypropyltrimethoxysilane; hexamethyldisilazane, γ-mercapto propyl trimethoxysilane and the like.

Examples of titanate coupling agents include tetraisopropoxy titanium, tetra-n-butoxy titanium, butyl titanate dimer, tetrastearyl titanate, titanium acetylacetonate, titanium lactate, tetraoctylene glycol titanate, titanium lactate, tetra stearoxy titanium and the like.

Examples of aluminum coupling agents include acetoalkoxyaluminum diisopropylate and the like.

Examples of epoxy resins include various epoxy resins such as generally commercially available bisphenol type epoxy resins, novolak type epoxy resins, bisphenol β-methyl glycidyl ethers, novolak resin β-ethyl glycidyl ethers, cyclic oxilane type epoxy resins, and resorcin type epoxy resins.

The solvent-free laminating adhesive of the present invention may contain other additives other than the above, as necessary. Examples of additives include leveling agents, inorganic fine particles such as colloidal silica and alumina sol, polymethyl methacrylate-based organic fine particles, defoaming agents, antisagging agents, wetting and dispersing agents, viscosity modifiers, ultraviolet absorbing agents, metal inactivating agents, peroxide decomposing agents, flame retardants, reinforcing agents, plasticizers, lubricants, rust inhibitors, fluorescent whitening agents, inorganic heat ray absorbers, flameproofing agents, antistatic agents, dehydrating agents, and the like.

It is possible to mix these pigments, adhesion promoters, and additives with either one of the polyisocyanate component (A) or the polyol component (B), or blending these pigments, adhesion promoters, and additives as a third component for use at the time of coating. Among these, from the viewpoint of workability, it is preferable to prepare a premix in which a pigment, an adhesion promoter, and an additive are preliminarily blended in a polyol component (B) as the polyol composition for lamination adhesives of the present invention and use the premix as a two-liquid type adhesive.

The solvent-free laminating adhesive of the present invention described in detail above is cured under temperature conditions of 20°C to 60°C after adhering the adherends to each other to obtain the cured product of the present invention, and although the applications thereof are not specified, the solvent-free laminating adhesive is particularly useful as an adhesive when laminating a plurality of films to form a multilayer film.

It is possible to obtain the multilayer film of the present invention by coating the solvent-free laminating adhesive of the present invention on a first plastic film, and then laminating a second plastic film on the coated surface and curing the adhesive layer.

Specifically, examples include a method in which the solvent-free laminating adhesive of the present invention is coated on the first plastic film by, for example, a roll coater coating method, and then another base material is bonded thereto without going through a drying step. The coating conditions are preferably such that the viscosity of the blended solution of the adhesive is approximately 300 to 3000 mPa·s at 40°C in a state of being heated to 30°C to 90°C in a typical roll coater. In addition, the coating amount is preferably 0.5 to 5 g/m², and more preferably approximately 0.5 to 3 g/m².

In addition, in a case where the multilayer film of the present invention is used for packaging applications, a film where printing ink is gravure-printed on the first plastic film may be used, and even in this case, it is possible to obtain a good laminated appearance.

In the case of using the solvent-free laminating adhesive composition of the present invention, the adhesive is cured in 12 to 48 hours at room temperature or under heating after lamination so as to develop practical physical properties.

Examples of the first plastic film used herein include base films such as polyethylene terephthalate (PET) films, nylon films, oriented polypropylene (OPP) films, and various vapor deposition films, aluminum foil, and the like, as well as sealant films such as cast polypropylene (CPP) films, vacuum metalized casted polypropylene (VMCPP) films, linear low density polyethylene (LLDPE) films, and the like as the other base materials.

As described above, the present invention provides an excellent multilayer film appearance even when subjected to high speed lamination with a solvent-free laminating machine, and, for example, it is possible to exhibit a good appearance even with high-speed processing of 200 m/min or more in a case of a film configuration of polyethylene terephthalate (PET) film/vacuum metalized casted (VMCPP) polypropylene film, or 350 m/min or more in a case of an OPP/CPP film configuration.

It is possible to industrially use the multilayer film obtained in this manner as a packaging material primarily for filling with foods, detergents, or medicine. Specific uses as detergents and medicines include liquid detergents for laundry, liquid detergents for kitchens, liquid detergents for baths, liquid soaps for baths, liquid shampoos, liquid conditioners and the like.

The packaging material produced using the solvent-free laminating adhesive of the present invention not only exhibits an excellent appearance, but also has excellent adhesiveness and content resistance without peeling of the laminate structure such as delamination when filled with contents such as detergents and medicine or after time passes from the filling.

### Examples

Detailed description will be given below of content and effects of the present invention using Examples. In the examples, "parts" means "parts by mass". In addition, the number average molecular weight (Mn) shown in each production example, examples and comparative example is a value measured by gel permeation chromatography (GPC) under the following conditions.

Measuring apparatus: HLC-8220 GPC manufactured by Tosoh Corporation
Column: TSK-GUARDCOLUMN SuperHZ-L manufactured by Tosoh Corporation
+ TSK-GEL SuperHZM-M × 4 manufactured by Tosoh Corporation Detector: Refractive Index Detector (RI)
Data processing: Multistation GPC-8020 model II manufactured by Tosoh Corporation
Measurement conditions: column temperature 40°C
   Solvent Tetrahydrofuran
   Flow rate 0.35 ml/min
Standard: Monodisperse polystyrene
Sample: A 0.2% by mass tetrahydrofuran solution in terms of resin solid content filtered with a microfilter (100 µl)

### Production Example 1

### [Synthesis of Polyisocyanate (A-1)]

36 parts of 4,4-diphenylmethane diisocyanate and 19 parts of 2,4'-diphenylmethane diisocyanate in a flask provided with a stirrer, a thermometer and a nitrogen gas inlet tube were put into a reaction container, stirred under nitrogen gas, and heated to 60°C. 11 parts of polypropylene glycol (hereinafter abbreviated as "PPG") having a number average molecular weight of 400, 22 parts of PPG having a number average molecular weight of 1,000, and 11 parts of PPG having a number average molecular weight of 2,000 were added dropwise in several portions and stirred for 5 to 6 hours to complete the urethane formation reaction. The NCO group content ratio of obtained polyisocyanate was 13.5% and the viscosity was 1500 mPa·s. This polyisocyanate is hereinafter abbreviated as "A-1".

### Production Example 2

### [Synthesis of Polyisocyanate (A-2)]

60.7 parts of adipic acid, 28.2 parts of ethylene glycol, and 11.1 parts of diethylene glycol were added to a polyester reaction container provided with a stirrer, a thermometer, a nitrogen gas inlet tube, a rectifying tube, a water separator, and the like, and gradually heated to and maintained at an internal temperature of 220°C such that the temperature of the upper portion of the rectifying tube did not exceed 100°C. When the acid value reached 2.0 mg KOH/g or less, the esterification reaction was completed to obtain a polyester polyol (referred to as the obtained polyester polyol "intermediate PE").

30 parts of 4,4-diphenylmethane diisocyanate and 30 parts of 2,4'-diphenylmethane diisocyanate were put into a flask provided with a stirrer, a thermometer, and a nitrogen gas inlet tube, stirred under nitrogen gas, and heated to 60°C. The intermediate PE was added dropwise in several portions and stirred for 5 to 6 hours to complete the urethane formation reaction. The NCO group content ratio of the obtained polyisocyanate was 14.0% and the viscosity was 3,000 mPa·s. This polyisocyanate is hereinafter abbreviated as "A-2".

### Production Example 3

### (Synthesis of Polyisocyanate (A-3))

55 parts of 4,4-diphenylmethane diisocyanate were put into a flask provided with a stirrer, a thermometer and a nitrogen gas inlet tube, stirred under a nitrogen gas, and heated to 60°C. 11 parts of PPG having a number average molecular weight of 400, 22 parts of PPG having a number average molecular weight of 1,000, and 11 parts of PPG having a number average molecular weight of 2,000 were added dropwise in several portions, and stirred for 5 to 6 hours to complete the urethane formation reaction. The NCO group content ratio of the obtained polyisocyanate was 13.6% and the viscosity was 2,000 mPa·s. This polyisocyanate is hereinafter abbreviated as "A-3".

### Production Example 4 (Synthesis of Polyester A)

19.7 parts of isophthalic acid, 38. 7 parts of adipic acid, 19.8 parts of ethylene glycol, and 21.8 parts of diethylene glycol were put into a polyester reaction container provided with a stirrer, a thermometer, a nitrogen gas inlet tube, a rectifying tube, a water separator, and the like and gradually heated to and maintained at an internal temperature of 220°C such that the temperature of the upper portion of the rectifying tube did not exceed 100°C. When the acid value reached 2.0 mg KOH/g or less, the esterification reaction was completed and a polyester polyol was obtained. The hydroxyl group value was 186 (mg KOH/g) and the number average molecular weight was approximately 600.

### Production Example 5 (Synthesis of Polyester B)

21.3 parts of isophthalic acid, 41. 9 parts of adipic acid, 16.8 parts of ethylene glycol, and 20.0 parts of diethylene glycol were put into a polyester reaction container provided with a stirrer, a thermometer, a nitrogen gas inlet tube, a rectifying tube, a water separator, and the like and gradually heated to and maintained at an internal temperature of 220°C such that the temperature of the upper portion of the rectifying tube did not exceed 100°C. When the acid value reached 2.0 mg KOH/g or less, the esterification reaction was completed and a polyester polyol was obtained. The hydroxyl group value was 56 (mg KOH/g) and the number average molecular weight was approximately 2,000.

### Examples 1 to 11 and Comparative Examples 1 to 10

A main body and a hardener were prepared according to each of the formulations shown in Tables 1 and 2 and these were blended and evaluated in various ways.

### (Evaluation of Adhesive Appearance)

The external appearance of the liquid at the time of blending the adhesive was evaluated according to the following criteria.
B: Transparent
C: Slight turbidity
D: White turbidity

### (Pot life)

After blending the main body and the hardener, the viscosity after 30 minutes at 40°C was measured.
A: less than 6,000 mPa·S (40°C)
B: 6,000 mPa·S or more (40°C)

### (Laminate Appearance Evaluation)

After blending the main body and the hardener, these were coated on a polyethylene terephthalate film (hereinafter abbreviated as "PET film") gravure printed in solid form with a white ink for white printing ("Finart R 794 white" manufactured by DIC Corporation) such that the coating amount had a solid content of approximately 1.8 g/m², and the coated surface of the film and the vacuum metalized casted polypropylene (hereinafter abbreviated as "VMCPP film") were stuck together with a laminator to produce a laminate film.

At this time, a laminate processed at a lamination speed of 150 m/min and a laminate processed at 150 m/min were evaluated according to the following criteria on the appearance of a white ink portion of a portion at 10 m from the outside of the winding after aging.

Next, an oriented polypropylene film (hereinafter abbreviated as "OPP film") gravure printed in solid form with white ink for white printing ("Finart R 794 white" manufactured by DIC Corporation) was coated with an adhesive such that the coating amount had a solid content of approximately 1.8 g/m² and the coated surface of the film and the cast polypropylene film (hereinafter abbreviated as "CPP film") were laminated with a laminator to produce a laminate film.

At this time, a laminate processed at a lamination speed of 300 m/min and a laminate processed at 350 m/min were evaluated according to the following criteria on the appearance of a white ink portion of a portion at 10 m from the outside of the winding after aging.

### Evaluation of the number of bubbles within a 1 cm² scale using a scale loupe

A: 0 bubbles
B: 1 to 4 bubbles
C: 5 to 16 bubbles
D: 17 or more bubbles

### (Misting Evaluation Method)

Using a solvent-free laminating machine, the state near the coating roll was visually checked when producing a laminate with an OPP/CPP configuration by high speed processing.
A: No mist up to 400 m/min
B: No mist up to 300 m/min
C: No mist up to 250 m/min
D: Mist generation up to 250 m/min

### (Heat Resistance Evaluation Method)

Using a test laminator (manufactured by Tester Sangyo Co., Ltd.), an oriented nylon ("Emblem" manufactured by Unitika Ltd., 15 µm, and hereinafter abbreviated as "ONy") film gravure printed in solid form with white ink for white printing ("FINART R 794 white" produced by DIC Corporation) was coated such that the coating amount was approximately 1.8 g/m², and a linear low density polyethylene ("TUX-HC" manufactured by Tohcello Inc., 60 µm, hereinafter abbreviated as "LLDPE film") was laminated thereon to produce a laminate.

Subsequently, the laminate was subjected to aging at 40°C for 3 days to cure the adhesive coating film to obtain a two-layer composite film of ONy film/adhesive composition/LLDPE film.

Using this composite film after aging, a pouch having a size of 120 mm × 120 mm was prepared and filled with 70 g of a dummy food in which vinegar, salad oil, and meat sauce were blended at a mass ratio of 1:1:1 as contents. The prepared pouches were subjected to boiling sterilization treatment at 98°C for 60 minutes, and then the appearance of the white ink portion was visually evaluated.

B: No change in appearance
D: Delamination occurred

**[Table 1]**

| | | | | Examples | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| Main body | A-1 | | | 120 | 120 | 160 | 160 | 160 | 120 | | | 60 | 60 | 60 | | |
| | A-2 | | | | | | | | | 120 | 120 | 60 | 60 | 60 | | |
| | A-3 | | | | | | | | | | | | | | 120 | 120 |
| Hardener | Castor oil | | | 60 | 70 | 80 | 80 | 80 | 30 | 30 | 80 | 30 | 80 | 30 | 70 | 80 |
| | PPG-3000 | | | | | 20 | | | 70 | 70 | 20 | 70 | 20 | | | |
| | PPG-4000 | | | 40 | 30 | | 20 | | | | | | | | 30 | 20 |
| | Trifunctional PPG-4000 | | | | | | | 20 | | | | | | 70 | | |
| NCO/OH | | | | 2.0 | 1.8 | 2.1 | 2.2 | 2.1 | 2.9 | 3.0 | 1.7 | 3.0 | 1.6 | 2.8 | 1.8 | 1.6 |
| Evaluation | Adhesive appearance | | | B | B | B | B | B | B | B | B | B | B | B | B | B |
| | Laminate appearance | PET/VMCPP | 150 m/min | A | A | A | A | A | A | A | B | A | A | A | A | A |
| | | | 200 m/min | A | A | B | B | B | A | A | B | A | B | A | A | B |
| | | OPP/CPP | 300 m/min | A | A | A | A | A | A | A | A | A | A | A | A | A |
| | | | 350 m/min | A | A | B | B | B | A | A | B | A | B | A | A | B |
| | Misting evaluation | | | A | A | B | B | B | A | A | B | A | B | A | A | B |
| | Pot life (40°C, after 30 mins) | | | B | B | B | B | B | B | B | B | B | B | B | B | B |
| | Heat resistance | | | B | B | B | B | B | B | B | B | B | B | B | B | B |

**[Table 2]**

| | | | | Comparative Examples | | | | | | | | | |
|---|---|---|---|---|---|---|---|---|---|---|---|---|---|
| | | | | 1 | 2 | 3 | 4 | 5 | 6 | 7 | 8 | 9 | 10 |
| Main body | A-1 | | | 160 | 160 | 160 | 160 | 100 | 160 | 160 | 300 | 100 | 100 |
| | A-2 | | | | | | | | | | | | |
| Hardener | Castor oil | | | 70 | 70 | 70 | 30 | | 100 | 60 | | | |
| | PPG-400 | | | | | | | | | | | | |
| | Trifunctional PPG-400 | | | 30 | | | | | | | 60 | | |
| | PPG-1000 | | | | 30 | | | | | | | | |
| | PPG-2000 | | | | | 30 | 70 | | | | | | |
| | PPG-3000 | | | | | | | 100 | | | | | |
| | PPG-4000 | | | | | | | | | | | 40 | 40 |
| | Polyester diol A: Mn=600 | | | | | | | | | 40 | 40 | 60 | |
| | Polyester diol B: Mn=2000 | | | | | | | | | | | | 60 |
| NCO/OH | | | | 1.2 | 2.0 | 2.2 | 3.3 | 4.7 | 1.8 | 1.7 | 1.7 | 1.5 | 4.0 |
| Evaluation | Adhesive appearance | | | B | B | B | B | B | B | D | B | C | D |
| | Laminate appearance | PET/VMCPP | 150 m/min | C | C | B | B | A | C | D | C | D | D |
| | | | 200 m/min | D | D | D | C | A | D | D | D | D | D |
| | | OPP/CPP | 300 m/min | C | C | B | B | A | C | D | B | D | D |
| | | | 350 m/min | D | D | D | C | A | D | D | D | D | D |
| | Misting evaluation | | | D | D | C | C | A | D | D | D | D | D |
| | Pot life (40°C, after 30 mins) | | | B | B | B | B | B | B | B | B | D | D |
| | Heat resistance | | | B | B | B | B | D | D | D | B | D | D |

The abbreviations in Tables 1 and 2 are as follows. PPG-400: polypropylene glycol having a number average molecular weight of 400
Tri-functional PPG-400: Trifunctional polypropylene glycol having a number average molecular weight of 400 (initiator: glycerin)
PPG-1000: polypropylene glycol having a number average molecular weight of 1,000
PPG-2000: polypropylene glycol having a number average molecular weight of 2,000
PPG-3000: polypropylene glycol having a number average molecular weight of 3,000
PPG-4000: polypropylene glycol having a number average molecular weight of 3,000
PET/VMCPP: Film composition of polyethylene terephthalate film and vacuum metalized casted polypropylene film
OPP/CPP: Film composition of oriented polypropylene film and cast polypropylene film

## Claims

1. A solvent-free laminating adhesive which is a solvent-free laminating adhesive composition comprising:
a polyisocyanate component (A) and a polyol component (B) as essential components,
wherein the polyol component (B) contains castor oil or a hydroxyl group-containing castor oil derivative (b1) and a polyalkylene glycol (b2) having a number average molecular weight of 2,500 to 7,000.

2. The solvent-free laminating adhesive according to claim 1,
wherein the polyol component (B) includes a hydroxyl group-containing vegetable oil and a polyalkylene glycol having a number average molecular weight of 3,000 to 7,000 at a mass ratio [hydroxyl group-containing vegetable oil/polyalkylene glycol] of 90/10 to 20/80.

3. The solvent-free laminating adhesive according to claim 1,
wherein the polyisocyanate component (A) is obtained by reacting an aromatic polyisocyanate with a polyether polyol and/or a polyester polyol.

4. The solvent-free laminating adhesive according to claim 1,
wherein a ratio of the polyisocyanate component (A) and the polyol component (B) to be used is such that an equivalent ratio [isocyanate group/hydroxyl group] of isocyanate groups in the polyisocyanate component (A) to hydroxyl groups in the polyol component (B) is from 1.0 to 5.0.

5. A polyol composition for lamination adhesives, comprising:
a castor oil or a hydroxyl group-containing castor oil derivative (b1); and
a polyalkylene glycol (b2) having a number average molecular weight of 2,500 to 7,000.

6. A cured product obtained by curing the solvent-free laminating adhesive according to claim 1, 2, 3, or 4.

7. A multilayer film obtained by coating the adhesive according to claim 4 on a first plastic film, laminating a second plastic film on the coated surface, and curing the adhesive layer.
